# EUROPÄISCHE PATENTSCHRIFT

(11) **EP 1 378 334 B1**
(45) Veröffentlichungstag und Bekanntmachung des Hinweises auf die Patenterteilung: **14.10.2009**
(21) Anmeldenummer: 03014341.6
(22) Anmeldetag: 26.06.2003
(51) Int. Cl.: B29C 45/37, B29C 45/44

(54) **Kunststoffspritzgussteil mit angeformter Kennzeichnung**
Injection moulded object with moulded identification mark
Objet moulé par injection avec marquage formé par moulage

(30) Priorität: 04.07.2002 DE 10230029
(43) Veröffentlichungstag der Anmeldung: 07.01.2004
(73) Patentinhaber: Diehl AKO Stiftung & Co. KG, 88239 Wangen (DE)
(72) Erfinder: Brauchle, Andreas, 88410 Bad Wurzach (DE)
(74) Vertreter: Diehl Patentabteilung

(56) Entgegenhaltungen:
- PATENT ABSTRACTS OF JAPAN vol. 013, no. 458 (M-880), 17. Oktober 1989 (1989-10-17) & JP 01 178426 A (FUJITSU LTD), 14. Juli 1989 (1989-07-14)
- PATENT ABSTRACTS OF JAPAN vol. 015, no. 389 (M-1164), 2. Oktober 1991 (1991-10-02) & JP 03 159710 A (BROTHER IND LTD), 9. Juli 1991 (1991-07-09)

## Beschreibung

Die Erfindung betrifft ein Kunststoffspritzgußteil gemäß dem Oberbegriff des Anspruches 1.

Dabei betrifft die Erfindung solche Kunststoffspritzgußteile, wie sie als Gehäuseteile etwa für Kabelklemmen, für Steckerbuchsen oder zum Einbau von Getrieben mit einem bedienungsseitig sich öffnenden Hohlraum ausgestaltet sind, in den etwa das Ende einer Kabellitze, der Stift einer Steckverbindung oder die Abtriebswelle eines Getriebes einzuführen sind. Solche Spritzgrußteile tragen häufig angeformte alphanumerische oder symbolische Kennzeichnungen, zum Individualisieren dieses Teiles etwa in einer Reihe von Kabelklemmen, hinsichtlich der Zuordnung eines Kabelsteckers oder bezüglich Getriebekenndaten.

Die Spritzgußform für ein solches Teil ist vor dem Auswerfer mit einem Kern zum Freisparen jenes Hohlraumes ausgestattet. Zum Entformen wird die Spritzgußform relativ zum Spritzgußteil in Richtung der Hohlraumachse verlagert und dann der Kern aus dem Gußteil entfernt. Das würde dafür sprechen, eine Matrize für die Kennzeichnung quer zu dieser Hauptentformungsrichtung in den Boden der Form einzulegen, damit die Matrize sich beim Entformen problemlos von der gegenüberliegenden, beim Entformen freigehobenen Stirnwand mit der Kennzeichnung abhebt.

Gerade auf der Stirnwand in der Umgebung der Öffnung zum Hohlraum in einem solchen Spritzgußteil wird die Anordnung dieser Kennzeichnung aber regelmäßig nicht gewünscht, weil sie beim Anschluß von Kabelbäumen, beim Aufbringen von Steckverbindern oder beim Bestücken mit einem Abtriebsritzel überdeckt werden könnte. Solche Kennzeichnungen sind deshalb regelmäßig auf einer Grundfläche angeordnet, die sich parallel zur Hohlraum-Längsachse und somit parallel zur Entformungsrichtung auf einer Seitenwandung findet, die etwa quer zur Stirnwand verläuft. Hier eingesenkt oder erhaben angeformte Kennzeichnungen würden allerdings beim Entformen von der Matrize aufgerissen bzw. auf der Grundfläche abgeschert werden, weshalb für die Kennzeichnung auf einer Grundfläche parallel zur Haupt-Entformungsrichtung eine technologisch sehr viel aufwendigere Spritzgußform mit quer zur Haupt-Entformungsrichtung zu verlagernden Schiebern für das Einbringen der Kennzeichnung erforderlich ist. Nach dem Spritzgußvorgang wird dann zunächst der Schieber mit der Matrize für die Kennzeichnung quer zur Haupt-Entformungsrichtung vom Spritzgußteil abgehoben, um danach die eigentliche Spritzgussform in Richtung der Hohlraumachse abziehen zu können, ohne dabei die erhabene oder eingesenkte Kennzeichnung zu zerstören, weil ja nun deren Matrize vom schon quer zur Haupt-Entformungsrichtung verlagerten Schieber freigehoben wurde.

Die JP 01 178426 A beschreibt die Herstellung von spritzgegossenen Tasten, die sowohl auf ihrer Stirnwand als auch auf ihrer Seitenwand erhaben angeformte Buchstaben aufweisen. Die Seitenflächen der erhabenen Buchstaben sind parallel zur Entformungsrichtung ausgestaltet. Da keinerlei Vorsprünge in Querrichtung zur Entformungsrichtung vorliegen, wird es ermöglicht, dass die Gussform in Entformungsrichtung abgehoben werden kann und entlang der Seitenflächen der Buchstaben entlang geführt werden kann. Für die Kennzeichnung und Entformung von Gehäuseteilen etwa für Kabelklemmen, für Steckerbuchsen oder zum Einbau von Getrieben ist diese Herstellungsart ungeeignet.

Der Erfindung liegt die technische Problemstellung zugrunde, den erheblichen technischen und finanziellen Mehraufwand für die Querschieber-Ausstattung zum Einbringen einer Kennzeichnung in das Kunststoffspritzgußteil eines Klemmen-, Stecher-, Getriebe- oder dergleihen Gehäuses zu einbrigen.

Diese Aufgabe wird durch ein kunststoffspritzgußteil mit den Merkmalen des Anspruchs 1 gelöst. Insbesondere ist die weiterhin im wesentlichen parallel zur Hohlraumachse und damit Haupt-Entformungsrichtung orientierte Seitenwand für die Kennzeichnung nun dieser Haupt-Entformungsrichtung gegenüber geringfügig angestellt. Das hat zur Folge, daß die entsprechend angestellte Matrize auf dem korrespondierenden Wandungsbereich der Spritzgußform sich mit der relativen Axialverlagerung zum entfernteren Bereich der Grundfläche hin radial von der Grundfläche mit der eingeprägten oder auftragenden Kennzeichnung abhebt. Dadurch wird die Kennzeichnung allenfalls im Bereich ihres von der Achse der Haupt-Entformungsrichtung am weitesten fort gelegenen Randbereich geringfügig beansprucht, die übrigen Bereiche der Kennzeichnung, die weiter zum Zentrum des Spritzgussteiles hin gelegen sind, werden dann wegen der voneinander abgehobenen Schrägen nicht mehr gestört.

Visuell fällt es kaum auf, daß die Seitenwand, die wie gewünscht quer zur Stirnwand und damit parallel zur Hauptentformungsrichtung orientiert ist, geringfügig geneigt ist. Diese Neigung in Richtung zur Stirnwand auf die Achse zu kann beim Ablesen aus Richtung der Stirnwand sogar zur Verbesserung der Erkennbarkeit der Kennzeichnung führen.

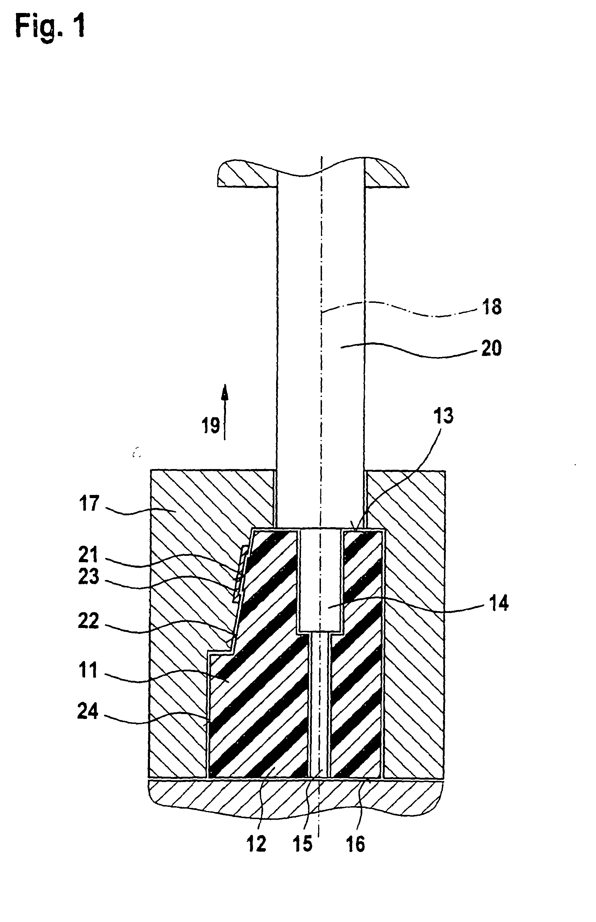

Hinsichtlich weiterer Vorteile und Einzelheiten der erfindungsgemäßen Lösung wird auch auf nachstehende Beschreibung eines in der Zeichnung unter Beschränkung auf das Wesentliche stark abstrahiert skizzierten bevorzugten Realisierungsbeispiels zur Erfindung verwiesen. Die einzige Figur der Zeichnung zeigt im Axiallängsschnitt ein nach Art einer Reihenklemme zur Aufnahme einer Steckerbuchse ausgestaltetes Kunststoffspritzgußteil in der Spritzgrußform, die nun zum Entformen des soeben ausgeformten und erstarrten Kunststoffspritzgrußteiles geöffnet werden kann.

Bei dem grob vereinfacht skizzierten Kunststoffspritzgußteil 11 handelt es sich also beispielsweise um ein brettförmiges Gehäuseteil 12. In dessen Stirnfläche 13 mündet ein zylindrischer Hohlraum 14, der gegenüberliegend in einen dazu konzentrischen Kanal 15 übergehet, welcher seinerseits sich zur Rückwand 16 öffnet. Der Hohlraum 14 ist beispielsweise dazu ausgelegt, für eine Steckverbindung die Kupplungsbuchse aufzunehmen, die durch den Kanal 15 hindurch an eine elektrische Leitung angeschlossen wird. Das ist aus der Zeichnung nicht ersichtlich, weil die Zeichnung den Zustand wiedergibt, in dem das Gehäuseteil 12 gerade im Kunststoffspritzguß erstellt wurde und nach dem Erkalten aus der haubenförmigen Spritzgußform 17 ausgeworfen werden soll. Dafür wird die Spritzgussform 17 parallel zur Achse 18 des Hohlraumes 14, die mit der Haupt-Entformungsrichtung 19 übereinstimmt, relativ zum Gehäuseteil 12 axial verlagert, bis ein Auswerfer 20, vor dessen Stirn ein dem abgestuften Hohlraum 14 entsprechender Kern montiert ist, das Gehäuseteil 12 vollständig aus dem Innenraum der Spritzgußform 17 freigeschoben hat.

Zur funktionalen Benennung des Hohlraumes 14 und damit des Gehäuseteiles 12 ist dieses mit einer beispielsweise alphanumerischen oder symbolischen Kennzeichnung 21 ausgestattet, die in eine Seitenwand 22 plastisch eingesenkt ist oder wie skizziert aus ihr erhaben vorragt. In diesem Bereich ist die Spritzguß form 17 in ihrem Innern, gewöhnlich austauschbar, mit einer Matrize 23 mit dem Negativ zur Kennzeichnung 21 ausgestattet. Weil wie schon eingangs erwähnt die Stirnwand 13 des Gehäuseteils 12 nach der Bestückung des Hohlraumes 14 oft nicht mehr visuell zugänglich ist, befindet sich die Grundfläche 22 für die Kennzeichnung 21 nicht in der Umgebung des Hohlraumes 14 in der Stirnwand 13, sondern quer dazu orientiert und somit parallel zur Hohlraumachse 18 bzw. Haupt-Entformungsrichtung 19 im Bereiche einer Seitenwand 24 des Gehäuseteils 12, hier in einem radial abgesetzten Bereich.

Die Matrize 23 würde die Kennzeichnung 21 allerdings ausbrechen bzw. abrasieren, wenn die Grundfläche 22 parallel zur Haupt-Entformungsrichtung 19 orientiert wäre und die Matrize 23 nicht eigens unter einem zuvor von der Kennzeichnung 21 abzuhebenden Querschieber freigestellt worden wäre. Um aber ein aufwendiges Schieberwerkzeug für das Kennzeichnungserfordernis zu vermeiden, ist erfindungsgemäß vorgesehen, die Grundfläche 22 nicht parallel zur Achse 18 der Entformungsrichtung 19 anzuordnen, sondern unter einem spitzen Winkel von typisch etwa 5° dazu in Richtung auf die Stirnwand 13 zu geneigt. Das hat zur Folge, daß die Matrize 23 bei einer axialen Relativverlagerung zwischen Gehäuseteil 12 und Spritzgussform 17 praktisch sofort in radialer Richtung von der auf der Grundfläche 22 ausgebildeten Kennzeichnung 21 freihebt. Allenfalls der oberste, der Matrize 23 am dichtesten benachbarte Rand der Kennzeichnung 21 wird kurzzeitig von der Matrize 23 auf Scherung in Richtung der Haupt-Entformungsrichtung 19 beansprucht und dabei - insoweit das Spritzgussmaterial noch nicht hinreichend ausgehärtet ist - geringfügig verdrückt, die Kennzeichnung 21 im übrigen bleibt aber unbeeinträchtigt.

Um dafür also eine teuere Spritzgußform 17 mit Querschieber für die Matrize 23 der Kennzeichnung 21 auf einer äußeren Gehäuse-Grundfläche 22, die im wesentlichen parallel zur Haupt-Entformungsrichtung 19 orientiert ist, zu vermeiden, sind erfindungsgemäß die Grundfläche 22 zur Aufnahme der Kennzeichnung 21 am Spritzgußteil 11 und dementsprechend die Matrize 23 mit der Kennzeichnung 21 in Richtung der Haupt-Entformungsrichtung 19 spitzwinklig geneigt angelegt. Das führt zum Abheben der Matrize 23 von der Grundfläche 22 mit der Kennzeichnung 21 im Zuge des Auswerfens des Spritzgussteils 11 aus der Spritzgussform 17, ohne dabei eine eingesenkte Kennzeichnung aufzureißen oder eine erhabene Kennzeichnung 21 abzuscheren.

## Patentansprüche

1. Klemmen-, Stecker-, Getriebe- oder dergleichen Gehäuse-Kunststoffspritzgussteil (11, 12) mit einem sich zu einer Stirnwand (13) öffnenden Hohlraum (14) und einer an einer Gehäusewand (22) eingesenkt oder erhaben angeformten Kennzeichnung (21),
wobei die mit der Kennzeichnung (21) versehene Gehäusewand (22) eine Seitenwand (22) des Kunststoffspritzgussteils (11, 12) ist, die unter spitzem Winkel gegenüber der Hohlraumachse (18) in Richtung der Stirnwand (13) zu angestellt ist,
**dadurch gekennzeichnet,**
**dass** die Seitenwand (22) unter spitzem Winkel von etwa 5° gegenüber der Hohlraumachse (18) angestellt ist.

## Claims

1. Plastic injection-moulded part (11, 12) of a terminal, connector, gear or similar casing, comprising a cavity (14) that is open towards an end wall (13) and an identification (21) that is moulded in a recessed or raised manner on a housing wall (22), the housing wall (22) that is provided with the identification (21) being a side wall (22) of the plastic injection-moulded part (11, 12) that is set at an acute angle to the cavity axis (18) in the direction of the end wall (13), **characterized in that** the side wall (22) is set at an acute angle of approximately 5° to the cavity axis (18).

## Revendications

1. Pièce moulée par injection de plastique d'un boîtier pour agrafes, connecteurs, engrenages ou similaires (11, 12) comprenant une cavité (14) s'ouvrant vers une paroi frontale (13) et un marquage (21) formé de manière renfoncée ou saillante sur une paroi de boîtier (22), la paroi de boîtier (22) pourvue du marquage (21) étant une paroi latérale (22) de la pièce moulée par injection de plastique (11, 12) qui doit être inclinée dans la direction de la paroi frontale (13) suivant un angle aigu par rapport à l'axe de la cavité (18),
**caractérisée en ce que**
la paroi latérale (22) est inclinée suivant un angle aigu d'environ 5° par rapport à l'axe de la cavité (18).
